# EUROPEAN PATENT SPECIFICATION

(11) **EP 2 719 626 B1**
(45) Date of publication and mention of the grant of the patent: **05.09.2018**
(21) Application number: 12796505.1
(22) Date of filing: 04.05.2012
(51) Int. Cl.: B64F 1/36, F24F 13/02, F16L 3/16

(54) **HOSE EXTRACTOR/RETRACTOR MODULE**
SCHLAUCHEXTRAKTOR- UND -RETRAKTORMODUL
MODULE D'EXTRACTION/DE RANGEMENT DE TUYAUX

(30) Priority: 09.06.2011 ES 201130635
(43) Date of publication of application: 16.04.2014
(73) Proprietor: Peña Haro, Bienvenido, 28810 Madrid (ES); Peña Medina, Jorge, 28810 Villalbilla (Madrid) (ES)
(72) Inventor: Peña Haro, Bienvenido, 28810 Madrid (ES); Peña Medina, Jorge, 28810 Villalbilla (Madrid) (ES)
(74) Representative: Del Valle Valiente, Sonia
(86) International application number: PCT/ES2012/070311
(87) International publication number: WO 2012/168518

(56) References cited:
- EP-A1- 0 296 272
- EP-A1- 1 705 413
- EP-A2- 2 085 311
- EP-A2- 2 085 311
- WO-A1-2011/064808
- GB-A- 2 382 564
- US-A- 3 739 971
- US-A1- 2002 121 308

## Description

### Object of the invention

The present invention relates to a hose extractor-retractor module, where said hose is mainly and preferably intended for supplying air conditioning to airplanes parked next to the fingers allowing for passenger boarding before takeoff.

The object of the invention as defined in the claim is providing a universal module which is adaptable to any kind of hose, and specifically to the different systems currently used without the need to make any modification thereof.

### Prior art

It is known that an airplane parked in an airport next to a finger for passenger boarding receives air conditioning service until the moment the airplanes takes off, said air conditioning being supplied by means of flexible hoses which may be associated to said boarding fingers or else be connected to underground systems by means of connections commonly known as "pits", such that in the first case the flexible hoses must be screwed manually by the operators, being dragged on the ground until they are plugged into the corresponding connector, said operation shortening the life thereof, and also requiring a great physical effort, said factors being worthy of consideration. A known hose extractor-retractor module is disclosed in document EP2085311A2. In those cases where the airplane is of the type having the air conditioning connector at the back of the hold, a second hose must be unscrewed from a small cart and the sections extended for reaching the connector position.

Patent of Invention P200701536 of the same applicant, as well as a subsequent Certificate of Addition thereof, disclose an air conditioning hose retractor, the hose being formed by sections coupled together, inside casings also successively coupled together, all elements being underground except for a section of the hose emerging to the outside and having in its outside end a coupling connector for propelling the air conditioning, all of it in combination with a cable associated to a gear motor for pulling the hose for retracting it into its non-working position.

The operating section of the hose is of the semi-rigid spiral type being provided with a plurality of interior metallic rings properly distributed at a certain distance along its length, said rings being fixed to the hose and affecting only a first section thereof, that is, the mentioned exterior part, said rings being fixed interiorly by any conventional means and having a plurality of cables associated thereto allowing for a perfect progressive retracting of the hose, said cables being fixed at their back end to a main pulling element to which the main retracting cable is associated and associated to the corresponding gear motor.

The Addition to such main Patent discloses a number of improvements relating to the connection between the sections of the hose, as well as a retracting pushbutton provided in a corresponding lid closing the gate of the exit "pit" corresponding to the hose itself.

In any case, installing the retractor referred to in those patents of the same applicant entails high costs, and also the way the hoses are treated may be improved in view of the damages they suffer due to friction with the ground.

On the other hand, there are nowadays several types of installations in the different airports of the world, some based on a telescopic tube coupled to the side of the boarding finger, in those cases where the provision of the air conditioning is carried out from a machine installed in the back, known as "finger islet", such that in those cases where the air supplying machine is suspended from the front part of the boarding finger, then no telescopic tube is necessary, but the installation of small carts and a basket for receiving the supply hoses to the airplanes is necessary.

Further, the extracting and retracting maneuver for this type of hose is manual, being carried out by operators, said maneuver being complicated due to the weight and effort required both for the extraction and for the retracting operations.

### Description of the invention

The module for the extraction and retracting of hoses which is the object of this invention has been designed for solving the above problems, providing a universal module which can be adapted to all types of currently existing installations without the need to any important modification of existing systems, and being also very reliable.

The module is designed for being adapted both to the front part of the finger or else to the existing telescopic tube, the extraction being in any case very easy and allowing the hoses to be housed inside their corresponding enclosures, in such a way that by no means special hoses are required, except if a specific need arises, therefore reducing the cost for the client.

More specifically, the module of the invention is made of a tubular body having a rectangular prismatic configuration which is intended to be mounted both at the front part of the boarding fingers and in an intermediate location of the finger or tube, as well as in "pit" type underground systems or in mobile units, therefore it can be adapted to any type of system or assembly.

Said module includes a vertically mounted rod system in both sides, making up like a cage on either side, in such a way that displacement of said rods entails dragging the hose in one or the other direction depending on whether said rods are displaced towards the front or towards the back, said dragging action taking place in a smooth and controlled way.

Obviously, the cages formed by those lateral rod systems are actuated by one or two gear motors having preset speed or by variable speed motors, such that in any case a reliable and smooth longitudinal movement transmission is obtained.

That is, the module of the invention comprises two rod sectors in the form of cages, vertically mounted in both sides of the hose tube, such that 50% of the rods of each side are geared with the flexible part of the hose, obviously in both sides, thus transmitting the longitudinal displacement movement both for the extraction and for the retracting.

The rods mounted in the module for dragging on the side corresponding to the flexible part of the hoses are provided between the coils thereof, and not in the coil, the dragging action being thus more flexible and less complicated in comparison with the conventional process.

It is also worth mentioning that the module can be adapted to any type and size of semi-rigid hose just by adjusting the system to the size or type of the specific hose, therefore not requiring an intelligent system for making the hose connector follow the finger movement, advancing and recoiling the hose at the same time, the connector being always in the same position.

Also, the module will include an emergency hose unlocking device or means, as well as control and protection controllers according to the current legislation.

### Description of the drawings

In order to complement the description below and with the object to aid in a better understanding of the features of the invention, according to an example of a preferred embodiment thereof, a set of drawings being an integral part of said description is attached where, by way of illustration and not of limitation, the following is represented:
Figure 1.- Shows a general perspective of the module of the invention coupled to a air conditioning supply hose for airplanes.
Figure 2.- Shows a perspective view of a section of the module allowing for the two lateral parts forming the hose dragging rod sets to be seen.

### Preferred embodiment of the invention

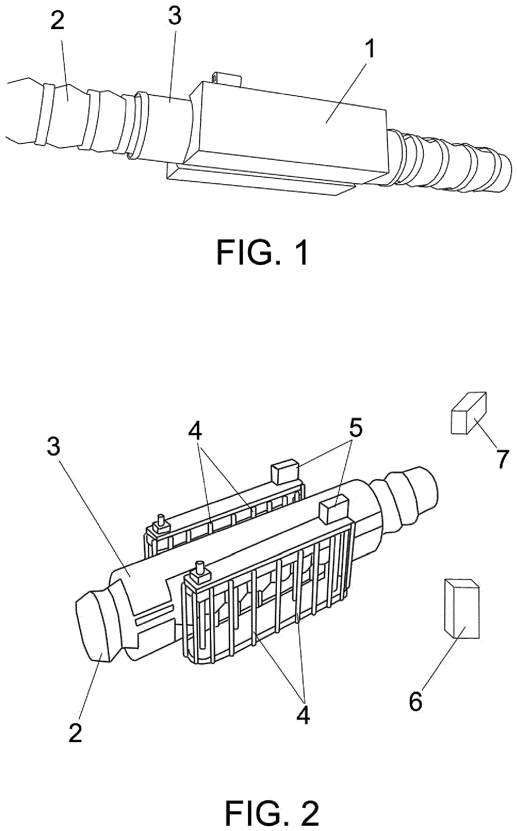

The above drawings disclose the module (1) of the invention designed for the extraction and retraction of semi-rigid hoses extending through a tube (3), said hose (2) being formed by coils, as clearly shown in figure 1.

In any case, the module (1) includes two lateral parts made by vertical rods (4) which are commonly actuate by means of a single gear motor (5), or else by means of a gear motor for each rod (4) part or group, such that the gear motor (5) or gear motors, depending on the turning direction, will cause the longitudinal displacement of the sides of the hose (1), dragging it either in the extraction direction or in the retraction direction depending on the displacement direction of the vertical rods (4).

Therefore, the module (1) comprises two lateral parts made of vertical rods (4) for dragging the hose (2), and it can comprise sensors for de detection of the entrance-retraction of the hose itself, as well as means for the adjustment of the diameter to the respective hose.

The unit is complemented by an electric cabinet (6) which is separated from the system represented in figure 2, as well as by a controller (7) for the extraction and retraction of the hose (2) itself.

As mentioned earlier, the module (1) may be coupled corresponding to the end or mouth of the hose (2) itself, or else be adapted to the conventional "pits".

## Claims

1. Hose extractor-retractor module (1) for supplying air conditioning to airplanes, being applicable both to systems based on a telescopic tube coupled to a side of the boarding finger, or in those cases where the air supplying machine is suspended from the front part of the boarding fingers themselves, small carts and a basket for receiving the supply hoses being necessary in those cases, wherein the module (1) is having a general prismatic body provided so as to surround a section of the hose (2), the said prismatic body comprises a gearmotor (5) for the displacement of the hose either in the extraction or in the retraction maneuvers, wherein the said module (1) comprises two lateral parts made by vertical rods (4) which, in use, are laterally actuated by said gearmotor (5),
**characterized in that**
the module (1) further comprises a tube (3) for receiving said hose (2) such that, in use, said hose (2) extends through said tube (3), and **in that** the said two lateral parts made by said vertical rods (4) are arranged on either side of said hose (2), and are arranged between and distal from the longitudinal ends of said tube (3) for receiving
said hose (2) such that,
in use, the vertical rods (4) are provided between the coils corresponding to said section of the hose (2) such that displacement of said rods entails dragging the hose (2).

## Patentansprüche

1. Schlauchextraktor- und -retraktormodul (1) zum Versorgen eines Flugzeugs mit Klimatisierung, wobei es sowohl auf Systeme, basierend auf einem Teleskoprohr, das mit einer Seite der Fluggastbrücke gekoppelt ist, oder in den Fällen anwendbar ist, in denen die Luftversorgungvorrichtung von dem vorderen Teil der Fluggastbrücken an sich hängt, wobei kleine Wagen und Körbe zum Empfangen der Versorgungsschläuche in diesen Fällen notwendig sind,
wobei das Modul (1)
einen allgemeinen prismatischen Körper hat, der so bereitgestellt ist, um einen Abschnitt des Schlauchs (2) zu umgeben, wobei der prismatische Körper
einen Getriebemotor (5) zur Verschiebung des Schlauchs entweder bei den Extraktions- oder bei den Retraktionsmanövern umfasst,
wobei
das Modul (1) zwei Seitenteile umfasst, die aus vertikalen Stäben (4) hergestellt sind, die bei Verwendung durch den Getriebemotor (5) lateral betätigt werden,
**dadurch gekennzeichnet, dass**
das Modul (1) ferner ein Rohr (3) zum Empfangen des Schlauchs (2) umfasst, sodass bei Verwendung der Schlauch (2) sich durch das Rohr (3) erstreckt, und dadurch, dass
die
zwei Seitenteile, die aus den vertikalen Stäben (4) hergestellt sind, auf beiden Seiten des Schlauchs (2) angeordnet sind, und zwischen und distal von den Längsenden des Rohrs (3) zum Empfangen des Schlauchs (2) angeordnet sind, sodass
bei Verwendung die vertikalen Stäbe (4) zwischen den Spulen bereitgestellt sind, die dem Abschnitt des Schlauchs (2) entsprechen, sodass die Verschiebung der Stäbe das Ziehen des Schlauchs (2) beinhaltet.

## Revendications

1. Module d'extraction-rétraction de tuyaux (1) pour fournir de l'air conditionné aux avions, étant applicable aussi bien aux systèmes consistant en un tube télescopique couplé à un côté de la passerelle d'embarquement, ou dans ces cas où la machine d'approvisionnement en air est suspendue à la partie avant des propres passerelles d'embarquement, de petits chariots et un panier pour recevoir les tuyaux d'approvisionnement étant nécessaires dans ces cas,
dans lequel le module (1) a un corps prismatique général prévu de sorte à entourer une section du tuyau (2), ledit corps prismatique comprend un moteur réducteur (5) pour le déplacement du tuyau dans les manoeuvres soit d'extraction soit de rétraction,
dans lequel ledit module (1) comprend deux parties latérales constituées de tiges verticales (4) qui, lorsqu'elles sont utilisées, sont latéralement actionnées par ledit moteur réducteur (5),
**caractérisé en ce que**
le module (1) comprend en outre un tube (3) pour recevoir ledit tuyau (2) de sorte que, lorsqu'il est utilisé, ledit tuyau (2) s'étend sur ledit tube (3), et **en ce que**
lesdites deux parties latérales constituées desdites tiges verticales (4) sont disposées de chaque côté dudit tuyau (2), et sont disposées au milieu et distales des extrémités longitudinales dudit tube (3) pour recevoir ledit tuyau (2) de sorte que, lorsqu'elles sont utilisées, les tiges verticales (4) sont prévues entre les bobines correspondant à ladite section du tuyau (2) de sorte que le déplacement desdites tiges provoque l'entraînement du tuyau (2).
